# EUROPÄISCHE PATENTANMELDUNG

(11) **EP 3 121 528 A1**
(43) Veröffentlichungstag der Anmeldung: **25.01.2017**
(21) Anmeldenummer: 16180639.3
(22) Anmeldetag: 21.07.2016
(51) Int. Cl.: F24J 2/04, F24J 2/52

(54) **MONTAGESYSTEM FÜR SOLARMODUL**

(30) Priorität: 24.07.2015 AT 506562015
(71) Anmelder: Holleis-Wiesinger, Georg Rudolf, 4273 Unterweißenbach (AT)
(72) Erfinder: Holleis-Wiesinger, Georg Rudolf, 4273 Unterweißenbach (AT)
(74) Vertreter: Burger, Hannes

(57) **Zusammenfassung**

Die Erfindung betrifft ein Montagesystem (3) zur Montage eines Solarmoduls an einer Dachfläche (1), umfassend eine Profilschiene (5) mit einer an der Unterseite (8) der Profilschiene (5) ausgebildeten Auflagefläche (9) und einer an der Oberseite (10) der Profilschiene (5) ausgebildeten Befestigungsvertiefung (11) zur Aufnahme eines Befestigungsmittels (21), wobei die Befestigungsvertiefung (11) durch einen ersten Auflagebereich (12) und einen zweiten Auflagebereich (13) begrenzt ist. An einer ersten Seite (16) der Profilschiene (5) ist ein erstes folienartiges Element (17) angeordnet und an einer zweiten Seite (18) der Profilschiene (5) ist ein zweites folienartiges Element (19) angeordnet. Die folienartigen Elemente (17) verhindern das Eindringen von Regenwasser auf die Dachfläche (1).

## Beschreibung

Die Erfindung betrifft ein Montagesystem zur Montage eines Solarmoduls an einer Dachfläche, insbesondere zur Montage des Solarmoduls über der bestehenden Dachabdeckung.

Aus der EP 2 184 418 A1 ist eine Halterungsanordnung für die Aufdachmontage von Solarmodulen bekannt, wobei die Halterungsanordnung als Ersatzelement für eines der Dacheindeckungselemente dient. Die Halterungsanordnung umfasst ein Befestigungsmittel, welches an der Dachfläche angebracht wird und eine Bohrung zur Aufnahme eines Verbindungsmittels zum Haltern eines Solarmodules aufweist. Die Halterungsanordnung umfasst weiters ein folienartiges Element, welches flexibel und regendicht ist. Das folienartige Element ist über das Befestigungsmittel gelegt und dient dazu um die Lücke in den Dacheindeckungselementen zu schließen. Das folienartige Element weist mittig eine Öffnung auf, welche mit der Bohrung im Befestigungsmittel deckungsgleich ist und zur Durchführung des Verbindungsmittels dient.

Die aus der EP 2 184 418 A1 bekannte Halterungsanordnung weist den Nachteil auf, dass das Befestigungsmittel genau mittig der Halterungsanordnung positioniert werden muss, um ein Solarmodul befestigen bzw. aufnehmen zu können, wobei ein Verschieben des Befestigungsmittels nicht möglich ist.

Der vorliegenden Erfindung liegt die Aufgabe zugrunde ein verbessertes Montagesystem zur Aufnahme von Solarmodulen zu schaffen.

Diese Aufgabe der Erfindung wird durch die Merkmale gemäß Anspruch 1 gelöst.

Erfindungsgemäß ist ein Montagesystem zur Montage eines Solarmoduls an einer Dachfläche ausgebildet. Das Montagesystem umfasst eine Profilschiene mit einer an der Unterseite der Profilschiene ausgebildeten Auflagefläche und einer an der Oberseite der Profilschiene ausgebildeten Befestigungsvertiefung zur Aufnahme eines Befestigungsmittels, wobei die Befestigungsvertiefung durch einen ersten Auflagebereich und einen zweiten Auflagebereich begrenzt ist. An einer ersten Seite der Profilschiene ist ein erstes folienartiges Element angeordnet. An einer zweiten Seite der Profilschiene ist ein zweites folienartiges Element angeordnet. Die folienartigen Elemente verhindern das Eindringen von Regenwasser auf die Dachfläche. Vorzugsweise kann vorgesehen sein, dass die folienartigen Elemente flexibel und regendicht sind.

Ein Vorteil der erfindungsgemäßen Ausbildung liegt darin, dass das Montagesystem als Ersatz für Dacheindeckungselemente wie etwa Ziegeln, verwendet werden kann. Durch die Ausgestaltung des Montagesystems in Form einer Profilschiene mit einer mittig ausgebildeten Befestigungsvertiefung kann ein zu montierendes Solarmodul entlang der Befestigungsvertiefung verschieblich befestigt werden. Die Befestigungsvertiefung kann in Form einer Rinne ausgebildet sein. Dadurch ist es möglich das Solarmodul noch nach dem Positionieren und Befestigen der Profilschiene am Dach zu verschieben und somit dessen Position zu bestimmen. Darüber hinaus kann Regenwasser durch die Befestigungsvertiefung abgeführt werden. Die Befestigungsvertiefung dient dabei gleichzeitig als Regenrinne. Dadurch dass seitlich der Befestigungsvertiefung jeweils ein folienartiges Element angeordnet ist, kann erreicht werden, dass durch das Montagesystem das Eindringen von Regenwasser auf die Dachfläche verhindert wird. Somit kann das Montagesystem als vollwertiger Ersatz für ein Dacheindeckungselement verwendet werden. Darüber hinaus ist das folienartige Element derart flexibel, dass es sich an verschiedene Ausgestaltungsformen von Dacheindeckungselementen anpassen kann. Somit ist das Montagesystem universell für verschiedene Arten von Dacheindeckungselementen einsetzbar.

Weiters kann es zweckmäßig sein, dass ein drittes folienartiges Element an einem Längsende der Profilschiene angeordnet ist. Von Vorteil ist hierbei, dass das Regenwasser, welches durch die Befestigungsvertiefung oder entlang der beiden folienartigen Elemente geführt wird, durch das dritte folienartige Element auf die Oberseite der in Dachneigung unterhalb des Montagesystems angeordneten Dacheindeckungselemente geleitet werden kann, sodass es von dort abrinnen kann.

Ferner kann vorgesehen sein, dass die Profilschiene symmetrisch bezüglich einer Symmetrieebene ausgebildet ist, wobei die Befestigungsvertiefung mittig der Symmetrieebene angeordnet ist. Von Vorteil ist hierbei, dass bei der Montage der Profilschiene die Orientierung dieser nicht beachtet werden muss. Darüber hinaus kann eine derartig ausgebildete Profilschiene einfach und kostengünstig gefertigt werden.

Darüber hinaus kann vorgesehen sein, dass das erste folienartige Element und das zweite folienartige Element seitlich über die Profilschiene überstehend ausgebildet sind. Von Vorteil ist hierbei, dass die folienartigen Elemente in die seitlich angrenzenden Dacheindeckungselemente eingebunden werden können.

Vorteilhaft ist auch eine Ausprägung, gemäß welcher vorgesehen sein kann, dass die Befestigungsvertiefung in der Profilschiene zumindest zwei Befestigungsvorsprünge für zwei verschiedene Arten von Befestigungsmitteln aufweist. Dadurch können verschiedene Arten von Befestigungsmitteln in nur einer Art von Profilschiene geklemmt werden, wodurch die Profilschiene universell einsetzbar ist.

Gemäß einer Weiterbildung ist es möglich, dass das erste folienartige Element und das zweite folienartige Element mittels einer Klebeverbindung an der Profilschiene befestigt sind, wobei jeweils eine Unterseite der beiden folienartigen Elemente einen Klebestreifen aufweist. Von Vorteil ist hierbei, dass die folienartigen Elemente durch den Klebestreifen gut am Profil befestigt werden können. Alternativ zu einem Klebestreifen am folienartigen Element kann auch vorgesehen sein, dass ein Klebestreifen an der Profilschiene angeordnet ist.

Ferner kann es zweckmäßig sein, dass eine Länge des ersten folienartigen Elementes in etwa gleich groß ist wie eine Länge des zweiten folienartigen Elementes. Von Vorteil ist hierbei, dass bei der Montage des Montagesystems auf der Dachfläche nicht auf die Orientierung des Montagesystems geachtet werden muss.

Darüber hinaus kann vorgesehen sein, dass die folienartigen Elemente aus einem Kunststoffmaterial gebildet sind. Von Vorteil ist hierbei, dass ein Kunststoffmaterial eine hohe Langzeitbeständigkeit und Dichtheit aufweist und darüber hinaus flexibel genug ist, um sich an verschiedenste Geometrien von Dacheindeckungen anpassen zu können. Ein Kunststoffmaterial zur Verwendung für die folienartigen Elemente kann beispielsweise ein Polyolefin wie Polyethylen oder Polypropylen sein. Weiters ist es auch denkbar, dass das Kunststoffmaterial beispielsweise an einer Seite eine Faserverstärkung aufweist.

Gemäß einer besonderen Ausprägung ist es möglich, dass die Profilschiene als Stranggussteil, beispielsweise aus Aluminium, ausgebildet ist. Von Vorteil ist hierbei, dass Aluminiumstranggussteile in beliebiger Länge gefertigt werden können, wobei eine hohe Fertigungsgenauigkeit erreicht werden kann. Der Werkstoff Aluminium weist darüber hinaus eine geringe Dichte auf, sodass die Profile einfach zu handhaben sind.

Alternativ dazu kann vorgesehen sein, dass die Profilschiene durch Strangguss aus einem Kunststoffmaterial gebildet ist.

In einer weiteren Ausführungsvariante kann vorgesehen sein, dass die Profilschiene aus einem Blechumformteil gebildet ist.

Ein Solarmodul im Sinne dieses Dokumentes umfasst sowohl ein thermisches Solarmodul zur Umwandlung von Sonnenenergie in Wärmeenergie, als auch ein Photovoltaikmodul zur Umwandlung von Sonnenenergie in elektrische Energie.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Schrägdaches mit Ziegeleindeckung und Montagesystem für ein Solarmodul;
- Fig. 2: eine Schnittdarstellung eines ersten Ausführungsbeispiels des Montagesystems gemäß der Schnittlinie II-II aus Fig. 1;
- Fig. 3: eine Schnittdarstellung eines zweiten Ausführungsbeispiels des Montagesystems gemäß der Schnittlinie II-II aus Fig. 1;
- Fig. 4: eine Schnittdarstellung eines dritten Ausführungsbeispiels des Montagesystems gemäß der Schnittlinie II-II aus Fig. 1;
- Fig. 5: eine Schnittdarstellung eines weiteren Ausführungsbeispiels des Montagesystems gemäß der Schnittlinie V-V aus Fig. 2;
- Fig. 6: eine perspektivische Ansicht eines Montagesystems zur Montage eines Solarmoduls.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

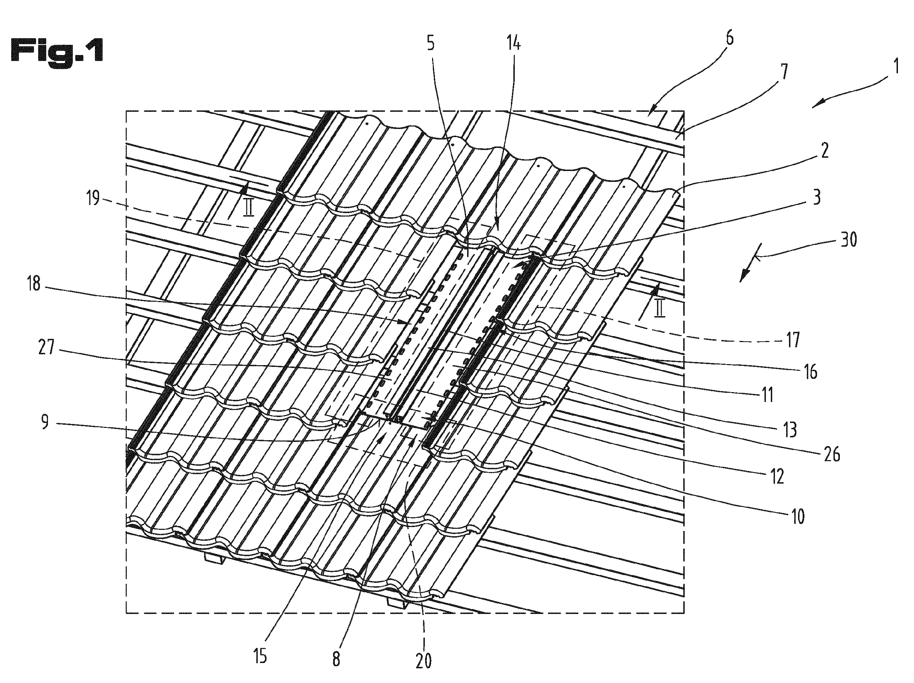

Fig. 1 zeigt eine perspektivische Ansicht einer Dachfläche 1 welche mit Dachziegeln 2 gedeckt ist. Einige der Dachziegel 2 sind herausgenommen und als Ersatz für die entfernten Dachziegel 2 ist ein Montagesystem 3 zur Montage eines Solarmoduls 4 an der Dachfläche 1 angeordnet. Für eine bessere Übersichtlichkeit ist das Solarmodul 4 in der Fig. 1 nicht dargestellt.

Das erfindungsgemäße Montagesystem 3 kann zur Montage des Solarmoduls 4 an verschiedensten Dacheindeckungen verwendet werden. Beispielsweise ist es auch möglich, dass anstatt der Dachziegel 2 etwa Eternitplatten, Holzschindeln, Bitumenbahnen, ein Wellblech oder eine sonstige Dacheindeckung durch das Montagesystem 3 ersetzt wird.

Das Montagesystem 3 wird am Dachunterbau 6, insbesondere an den Dachlatten 7, befestigt. An einer Unterseite 8 der Profilschiene 5 ist eine Auflagefläche 9 ausgebildet, mittels welcher die Profilschiene 5 am Dachunterbau 6 aufliegt.

An der Oberseite 10 der Profilschiene 5 ist eine Befestigungsvertiefung 11 ausgebildet. Die Befestigungsvertiefung 11 wird durch einen ersten Auflagebereich 12 und einen zweiten Auflagebereich 13 begrenzt, welche Auflagebereiche 12, 13 direkt oder indirekt zur Aufnahme eines Solarmoduls 4 dienen.

Wie aus Fig. 1 ersichtlich, erstreckt sich die Befestigungsvertiefung 11 in Längsrichtung der Profilschiene 5, insbesondere von einem oberen Längsende 14 zu einem unteren Längsende 15 der Profilschiene 5. Durch diese Ausgestaltung der Befestigungsvertiefung 11 dient diese im montierten Zustand des Montagesystems 3 als Wasserrinne zur Abführung von Regenwasser.

Wie in Fig. 1 schematisch dargestellt, ist an einer ersten Seite 16 der Profilschiene 5 ein erstes folienartiges Element 17 angeordnet. An einer zweiten Seite 18 der Profilschiene 5 ist ein zweites folienartiges Element 19 angeordnet. Die beiden folienartigen Elemente 17, 19 sollen das Eindringen von Regenwasser auf die Dachfläche 1 verhindern. Um dies zu erreichen, sind die beiden folienartigen Elemente 19 an der Profilschiene 5 befestigt und stehen seitlich gegenüber der Profilschiene 5 vor. Dadurch können die folienartigen Elemente 17, 19 unter die bestehende Dacheindeckung geführt werden, wodurch eine Wasserdichtheit erreicht werden kann. Die beiden folienartigen Elemente 17, 19 sind vorzugsweise an der Oberseite 10 der Profilschiene 5 aufgeklebt, sodass die Profilschiene 5 und die folienartigen Elemente 17, 19 dicht abschließen.

Weiters kann vorgesehen sein, dass ein drittes folienartiges Element 20 am unteren Längsende 15 der Profilschiene 5 angeordnet ist. Das dritte folienartige Element 20 ist vorzugsweise an der Unterseite 8 der Profilschiene 5 befestigt, um das über die Profilschiene 5 laufende Regenwasser auf die unterhalb des Montagesystems 3 liegenden Dachziegel 2 leiten zu können.

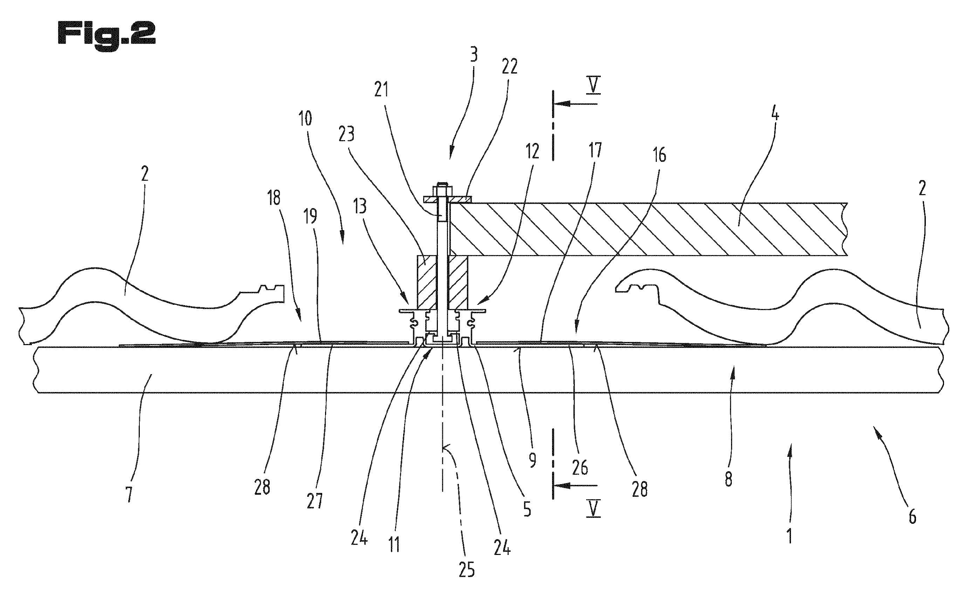

In der Fig. 2 ist eine weitere und gegebenenfalls für sich eigenständige Ausführungsform der Profilschiene 5 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Fig. 2 zeigt eine Detailansicht der Profilschiene 5 im an der Dachfläche 1 montierten Zustand, wobei eine Darstellung gemäß der Schnittlinie II-II nach Fig. 1 gewählt wurde.

Wie aus Fig. 2 ersichtlich, ist vorgesehen, dass in die Befestigungsvertiefung 11 ein Befestigungsmittel 21 eingreift, welches zum Spannen eines Befestigungselementes 22 dient und das Solarmodul 4 in seiner Position klemmen zu können. Weiters kann ein Unterlageelement 23 vorgesehen sein, welches an zumindest einem der beiden Auflagebereiche 12, 13 aufliegt und zur Beabstandung des Solarmodules 4 vom Dachunterbau 6 dient. Das Befestigungsmittel 21 kann insbesondere in Form einer Schraube ausgebildet sein. Das Befestigungsmittel 21 weist einen Kopfbereich auf, welcher dazu ausgebildet ist, um mit der Befestigungsvertiefung 11 zusammen zu wirken und in dieser aufgenommen zu werden. Insbesondere kann vorgesehen sein, dass das Befestigungsmittel 21 beispielweise einen Hammerkopf aufweist und das in der Befestigungsvertiefung 11 ein Befestigungsvorsprung 24 vorgesehen ist, in welchen das Befestigungsmittel 21 formschlüssig eingreifen kann. Durch diese Ausbildung, ist das Befestigungsmittel 21 in der Befestigungsvertiefung 11 entlang der Längserstreckung der Profilschiene 5, verschiebbar.

Wie in Fig. 2 weiters ersichtlich, kann vorgesehen sein, dass die Profilschiene 5 bezüglich einer Symmetrieebene 25 symmetrisch ausgebildet ist. Weiters kann vorgesehen sein, dass die Profilschiene 5, einen ersten Schenkel 26 und einen zweiten Schenkel 27 aufweist, welche jeweils an die beiden Auflagebereiche 12, 13 anschließen. Weiters kann vorgesehen sein, dass eine Unterseite 28 des folienartigen Elementes 17, 19 an einem der beiden Schenkel 26, 27 festgeklebt ist.

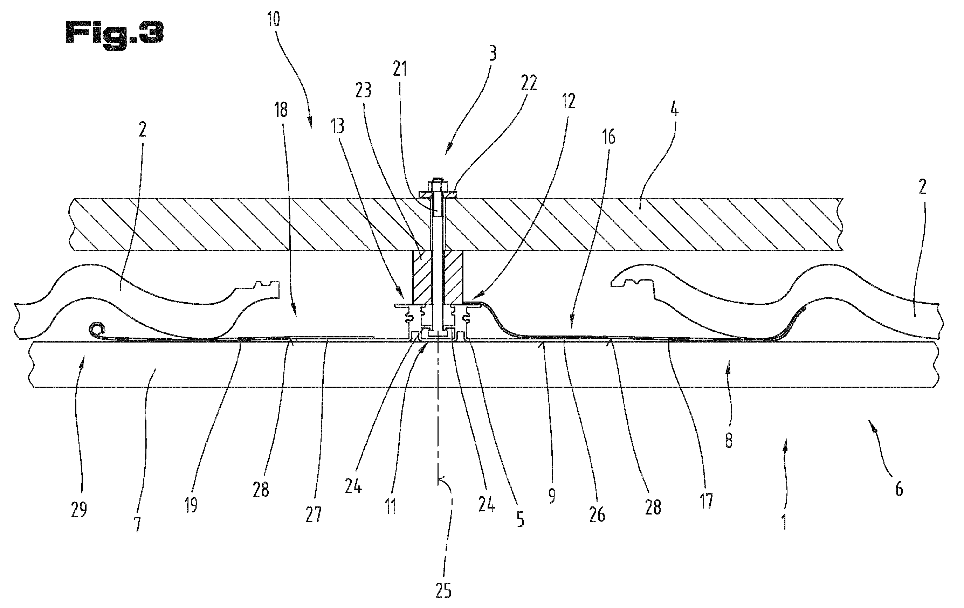

In der Fig. 3 ist eine weitere und gegebenenfalls für sich eigenständige Ausführungsform des Montagesystems 3 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Fig. 3 zeigt ein Ausführungsbeispiel des Montagesystems 3, wobei es ersichtlich ist, dass die folienartigen Elemente 17, 19 am ersten Auflagebereich 12 bzw. am zweiten Auflagebereich 13 der Profilschiene 5 befestigt sein können. In Fig. 3 ist dies nur rechts der Symmetrieebene 25 dargestellt, jedoch wird es als selbstverständlich gesehen, dass diese Variante beidseitig der Symmetrieebene 25 ausgestaltet werden kann.

Wie in Fig. 3 rechtsseitig der Symmetrieebene 25 dargestellt, kann weiters vorgesehen sein, dass die folienartigen Elemente 17, 19 beispielsweise mittels einem Kleber an der Unterseite der Dachziegel 2 befestigt werden. Alternativ dazu ist es auch möglich, dass an der Oberseite der folienartigen Elemente 17, 19 ein selbstklebender Streifen angeordnet ist, mittels welchem die folienartigen Elemente 17, 19 an den Dachziegeln 2 befestigt werden. Dies bringt den Vorteil mit sich, dass dadurch besonders gut vermieden werden kann, dass Regenwasser seitlich der folienartigen Elemente 17, 19 auf den Dachunterbau 6 gelangt.

In einer weiteren Alternativvariante kann vorgesehen sein, dass die folienartigen Elemente 17, 19 beispielsweise mittels einer Klemmleiste an der Profilschiene 5 befestigt sind. In wieder einer anderen Ausführungsvariante kann vorgesehen sein, dass die folienartigen Elemente 17, 19 mittels Befestigungsmitteln, wie etwa Nieten oder Schrauben an der Profilschiene 5 befestigt sind. Natürlich können auch alle weiteren dem Fachmann bekannten Befestigungsarten zur Befestigung der folienartigen Elemente 17, 19 an der Profilschiene 5 verwendet werden.

Linksseitig der Symmetrieebene 25 ist ein weiteres Ausführungsbeispiel gezeigt, bei welchem ersichtlich ist, dass vorgesehen sein kann, dass am folienartigen Element 17, 19 ein Wulst 29 ausgebildet ist, welcher ebenfalls verhindert, dass Regenwasser auf den Dachunterbau 6 gelangt. Natürlich kann auch eine derartige Ausführung beidseitig der Symmetrieebene 25 ausgebildet sein.

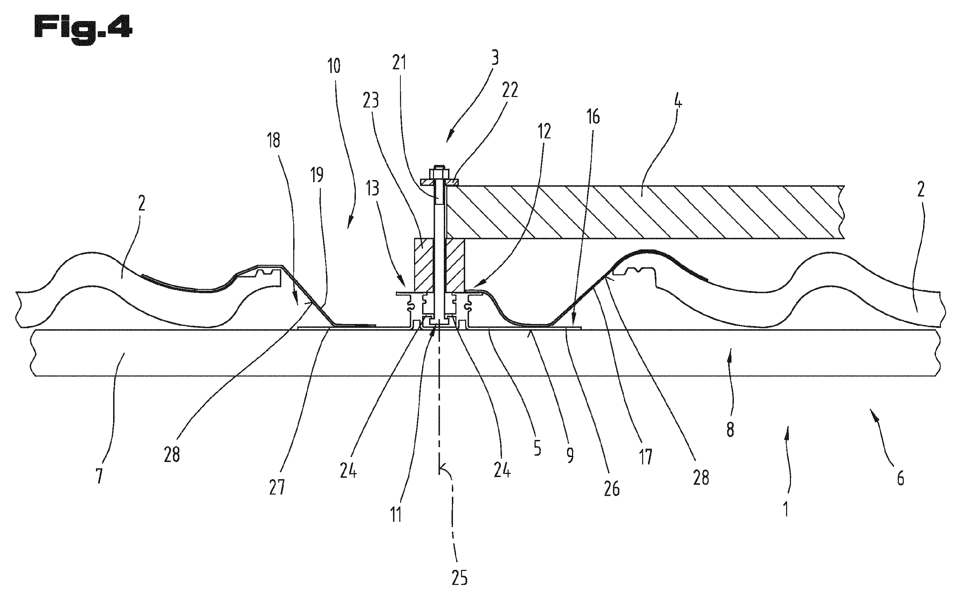

In der Fig. 4 ist eine weitere und gegebenenfalls für sich eigenständige Ausführungsform des Montagesystems 3 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich kann vorgesehen sein, dass die folienartigen Elemente 17, 19 nicht unter den Dachziegel 2 untergeschoben werden, sondern, dass die folienartigen Elemente 17, 19 jeweils auf den nebenliegenden Dachziegel 2 aufgelegt werden, wodurch sich eine Rinne ergibt, die das Regenwasser abführen kann.

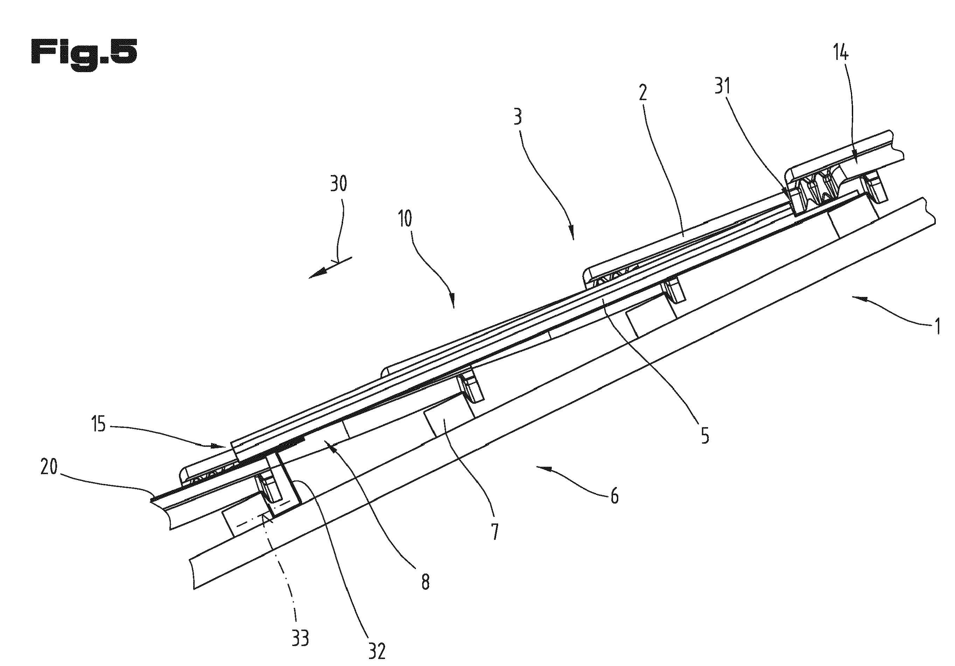

In der Fig. 5 ist eine weitere und gegebenenfalls für sich eigenständige Ausführungsform des Montagesystems 3 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Fig. 5 zeigt eine Seitenansicht des Montagesystems 3, welches an der Dachfläche 1 angeordnet wird. Wie aus Fig. 5 ersichtlich, läuft das Regenwasser einem Dachgefälle 30 folgend vom oberen Längsende 14 der Profilschiene 5 zum unteren Längsende 15, der Profilschiene 5.

Wie aus Fig. 5 ersichtlich, kann vorgesehen sein, dass das obere Längsende 14 der Profilschiene 5 an einer Dachlatte 7 aufliegt. Außerdem kann vorgesehen sein, das die Profilschiene 5 im Beriech des oberen Längsendes 14 unter den Dachziegel 2 geschoben ist. Dabei kann vorgesehen sein, dass die Profilschiene 5 im oberen Längsende 14 eine Aussparung 31 aufweist, durch welche ermöglicht wird das die Profilschiene 5 im Beriech des oberen Längsendes 14 unter den Dachziegel 2 geschoben wird.

Durch eine Anordnung der Profilschiene 5, wie sie in Fig. 5 dargestellt ist, ist es möglich, dass Regenwasser, welches oberhalb der Profilschiene 5 auf die Dachziegel 2 fällt, vom oberhalb der Profilschiene 5 liegenden Dachziegel 2 auf die Oberseite 10 der Profilschiene 5 geleitet wird. Dadurch kann das Regenwasser dem Dachgefälle 30 folgend mittels der Profilschiene 5 und den folienartigen Elementen 17, 19 an das untere Längsende 15 des Montagesystems 3 geleitet werden.

Am unteren Längsende 15 der Profilschiene 5, kann vorgesehen sein, dass ein Abstandhalter 32 ausgebildet ist, welcher die Profilschiene 5 von der Dachlatte 7 beabstandet aufnimmt und unterstützt. Dadurch kann erreicht werden, dass das untere Längsende 15 der Profilschiene 5 über einen auf das Dachgefälle 30 bezogen unterhalb des Montagesystems 3 angeordneten Dachziegel 2 gezogen werden kann, und somit das Regenwasser von der Profilschiene 5 auf die Oberseite des Dachziegels 2 geleitet werden kann.

Der Abstandhalter 32 kann beispielsweise als Blechbiegeteil ausgebildet sein und mittels eines Befestigungsmittels 33 am Dachunterbau 6, insbesondere an der Dachlatte 7, befestigt sein. Als Befestigungsmittel 33 kann hierbei ein Nagel oder eine Holzschraube verwendet werden.

Wie aus Fig. 5 weiters ersichtlich, kann das dritte folienartige Element 20 zusätzlich dazu dienen, um sicher zu stellen, das Regenwasser von der Profilschiene 5 auf die Oberseite der Dachziegel 2 geleitet wird. Dabei ist es notwendig, dass das dritte folienartige Element 20 an der Unterseite 8 der Profilschiene 5 angeordnet ist.

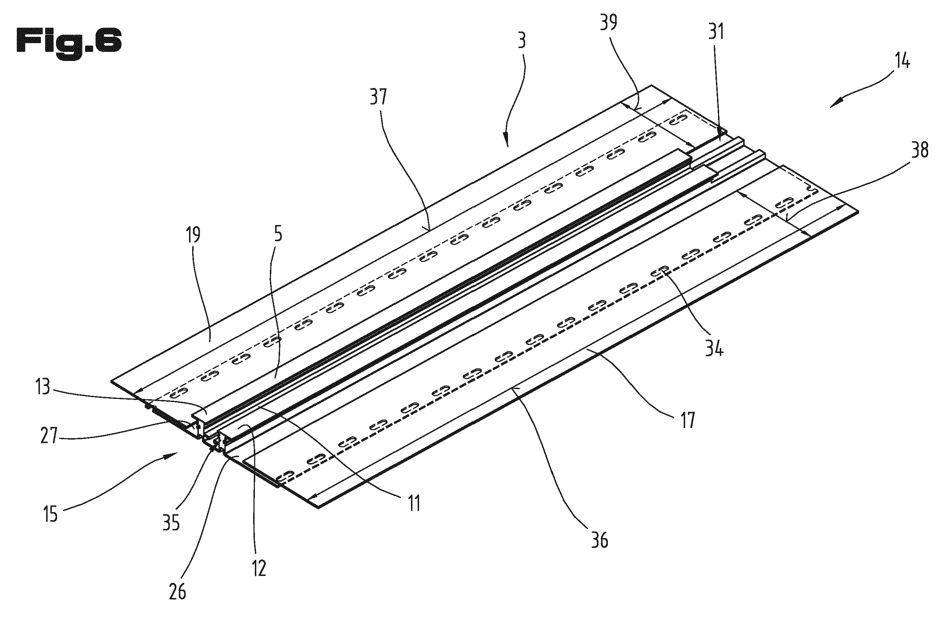

Fig. 6 zeigt eine perspektivische Ansicht des Montagesystems 3, insbesondere der Profilschiene 5, mit den daran angeordneten folienartigen Elementen 17, 19, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Das Montagesystem 3 wird als Ersatz für Dachziegel 2 in die Dachfläche 1 eingesetzt um Solarmodule 4 an der Dachfläche 1 montieren zu können. Wie in Fig. 6 besonders gut ersichtlich, kann vorgesehen sein, dass in der Profilschiene 5 Bohrungen 34 ausgebildet sind, durch welche die Profilschiene 5 am Dachunterbau 6 befestigt werden kann. Insbesondere können etwa Nägel oder Holzschrauben durch die Bohrungen 34 hindurchgeführt werden um die Profilschiene 5 an den Dachlatten 7 befestigen zu können.

Weiters ist aus Fig. 6 ersichtlich, dass die beiden Auflagebereiche 12, 13 eine Verzahnung 35 aufweisen können, welche dazu dient, die Klemmverbindung durch das Befestigungselement 22 zu verbessern.

Weiters kann vorgesehen sein, dass eine erste Länge 36 des ersten folienartigen Elementes 17 gleich groß ist, wie eine zweite Länge 37 des zweiten folienartigen Elementes 19. Die beiden Längen 36, 37 können in etwa gleich groß gewählt sein, wie die Länge der Profilschiene 5. Insbesondere hat sich gezeigt, dass es Vorteilhaft ist, wenn die folienartigen Elemente 17, 19, eine geringfügig größere Länge 36, 37 aufweisen als die Länge der Profilschiene 5, sodass die folienartigen Elemente 17, 19 über das obere Längsende 14 und das untere Längsende 15 der Profilschiene 5 vorstehen.

Eine erste Breite 38 bzw. eine zweite Breite 39 der beiden folienartigen Elemente 17, 19 sind vorzugsweise so gewählt, dass die seitlich des Montagesystems 3 angeordneten Dachziegel 2 durch die folienartigen Elemente 17, 19 mit ausreichender Überdeckung überlappt werden können.

Anhand einer Zusammenschau der Figuren 1-6 wird nun der Montagevorgang des Montagesystems 3 bzw. eines Solarmodules 4 an einer Dachfläche 1 beschrieben.

In einem ersten Verfahrensschritt, werden von der eingedeckten Dachfläche 1 einzelne Dachziegel 2 herausgenommen um Platz für das Montagesystem 3 zu schaffen.

In einem weiteren Verfahrensschritt kann nun optional vorgesehen sein, dass bezüglich des Dachgefälles 30 gesehen im unteren Bereich des entstandenen Loches der Abstandhalter 32 am Dachunterbau 6, insbesondere an einer der Dachlatten 7, befestigt wird.

In einem weiteren Verfahrensschritt kann vorgesehen sein, dass das Montagesystem 3, welches bereits auf die richtige Länge abgelängt ist, unter die oberhalb des Loches befindlichen Dachziegel 2 hineingeschoben wird, und am Dachunterbau 6 bzw. dem Abstandhalter 32 befestigt wird. Parallel dazu oder anschließend, können die seitlich der Profilschiene 5 angeordneten folienartigen Elemente 17, 19 entsprechend den Ausführungsmöglichkeiten nach den Figuren 2 -4 mit den seitlich angrenzenden Dachziegeln 2 verbunden werden.

Optional kann das dritte folienartige Element 20 mit dem unterhalb des Loches angeordneten Dachziegel 2 verbunden werden.

In einem weiteren Verfahrensschritt, können nun die Befestigungsmittel 21 in die Befestigungsvertiefung 11 eingesetzt werden und die Solarmodule 4 mittels der Befestigungselemente 22 und optional unter Verwendung der Unterlageelemente 23 an der Profilschiene 5 befestigt bzw. geklemmt werden.

Die Solarmodule 4 sind dabei teilweise oberhalb der Dachziegel 2 angeordnet. Durch die gezeigte Anordnung des Montagesystems 3 an der Dachfläche 1 läuft Regenwasser dem Dachgefälle 30 folgend von den Dachziegeln 2 auf die Profilschiene 5 bzw. die seitlich angeordneten, folienartigen Elemente 17, 19, und darunter wieder auf die Oberseite von unterhalb des Montagesystems 3 angeordneten Dachziegeln 2. Dadurch kann vermieden werden, das Regenwasser in den Dachunterbau 6 eindringt.

Die Ausführungsbeispiele zeigen mögliche Ausführungsvarianten des Montagesystems 3, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1, 2, 3, 4, 5, 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Montagesystems 3 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Dachfläche | 31 | Aussparung |
| 2 | Dachziegel | 32 | Abstandhalter |
| 3 | Montagesystem | 33 | Befestigungsmittel |
| 4 | Solarmodul | 34 | Bohrung |
| 5 | Profilschiene | 35 | Verzahnung |
| 6 | Dachunterbau | 36 | erste Länge |
| 7 | Dachlatte | 37 | zweite Länge |
| 8 | Unterseite | 38 | erste Breite |
| 9 | Auflagefläche | 39 | zweite Breite |
| 10 | Oberseite | | |
| 11 | Befestigungsvertiefung | | |
| 12 | erster Auflagebereich | | |
| 13 | zweiter Auflagebereich | | |
| 14 | oberes Längsende | | |
| 15 | unteres Längsende | | |
| 16 | erste Seite | | |
| 17 | erstes folienartiges Element | | |
| 18 | zweite Seite | | |
| 19 | zweites folienartiges Element | | |
| 20 | drittes folienartiges Element | | |
| 21 | Befestigungsmittel | | |
| 22 | Befestigungselement | | |
| 23 | Unterlageelement | | |
| 24 | Befestigungsvorsprung | | |
| 25 | Symmetrieebene | | |
| 26 | erster Schenkel | | |
| 27 | zweiter Schenkel | | |
| 28 | Unterseite folienartiges Element | | |
| 29 | Wulst | | |
| 30 | Dachgefälle | | |

## Patentansprüche

1. Montagesystem (3) zur Montage eines Solarmoduls (4) an einer Dachfläche (1), umfassend eine Profilschiene (5) mit einer an der Unterseite (8) der Profilschiene (5) ausgebildeten Auflagefläche (9) und einer an der Oberseite (10) der Profilschiene (5) ausgebildeten Befestigungsvertiefung (11) zur Aufnahme eines Befestigungsmittels (21), wobei die Befestigungsvertiefung (11) durch einen ersten Auflagebereich (12) und einen zweiten Auflagebereich (13) begrenzt ist, **dadurch gekennzeichnet, dass** an einer ersten Seite (16) der Profilschiene (5) ein erstes folienartiges Element (17) angeordnet ist und dass an einer zweiten Seite (18) der Profilschiene (5) ein zweites folienartiges Element (19) angeordnet ist, welche folienartigen Elemente (17) das Eindringen von Regenwasser auf die Dachfläche (1) verhindern.

2. Montagesystem nach Anspruch 1, **dadurch gekennzeichnet, dass** ein drittes folienartiges Element (20) an einem unteren Längsende (15) der Profilschiene (5) angeordnet ist.

3. Montagesystem nach Anspruch 1 oder 2, **dadurch gekennzeichnet, dass** die Profilschiene (5) symmetrisch bezüglich einer Symmetrieebene (25) ausgebildet ist, wobei die Befestigungsvertiefung (11) mittig der Symmetrieebene (25) angeordnet ist.

4. Montagesystem nach einem der vorhergehenden Ansprüche, **dadurch gekennzeichnet, dass** das erste folienartige Element (17) und das zweite folienartige Element (19) seitlich über die Profilschiene (5) überstehend ausgebildet sind.

5. Montagesystem nach einem der vorhergehenden Ansprüche, **dadurch gekennzeichnet, dass** die Befestigungsvertiefung (11) in der Profilschiene (5) zumindest zwei Befestigungsvorsprünge (24) für zwei verschiedene Arten von Befestigungsmitteln (21) aufweist.

6. Montagesystem nach einem der vorhergehenden Ansprüche, **dadurch gekennzeichnet, dass** das erste folienartige Element (17) und das zweite folienartige Element (19) mittels einer Klebeverbindung an der Profilschiene (5) befestigt sind, wobei jeweils eine Unterseite (28) der beiden folienartigen Elemente (17, 19) einen Klebestreifen aufweist.

7. Montagesystem nach einem der vorhergehenden Ansprüche, **dadurch gekennzeichnet, dass** eine erste Länge (36) des ersten folienartigen Elementes (17) in etwa gleich groß ist wie eine zweite Länge (37) des zweiten folienartigen Elementes (19).

8. Montagesystem nach einem der vorhergehenden Ansprüche, **dadurch gekennzeichnet, dass** die folienartigen Elemente (17, 19, 20) aus einem Kunststoffmaterial gebildet sind.

9. Montagesystem nach einem der vorhergehenden Ansprüche, **dadurch gekennzeichnet, dass** das erste folienartige Element (17) am ersten Auflagebereich (12) befestigt ist und dass das zweite folienartige Element (19) am zweiten Auflagebereich (13) befestigt ist.

10. Montagesystem nach einem der vorhergehenden Ansprüche, **dadurch gekennzeichnet, dass** die Profilschiene (5) an einem oberen Längsende (14) eine Aussparung (31) der Auflagebereiche (12, 13) aufweist.
